(19) Europäisches Patentamt
European Patent Office
Office européen des brevets

(11) **EP 4 546 635 A1**

(12) **EUROPEAN PATENT APPLICATION**
published in accordance with Art. 153(4) EPC

(43) Date of publication:
**30.04.2025 Bulletin 2025/18**

(21) Application number: **23830800.1**

(22) Date of filing: **19.04.2023**

(51) International Patent Classification (IPC):
*H02M 7/48* *(2007.01)*

(52) Cooperative Patent Classification (CPC):
**H02M 7/48**

(86) International application number:
**PCT/JP2023/015583**

(87) International publication number:
**WO 2024/004346 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.06.2022   JP 2022102905**

(71) Applicant: **DENSO CORPORATION
Kariya-city, Aichi 448-8661 (JP)**

(72) Inventors:
• **ITO, Mitsutaka
  Nisshin-city, Aichi 470-0111 (JP)**
• **KUBO, Shunichi
  Kariya-city, Aichi 448-8661 (JP)**

(74) Representative: **TBK
Bavariaring 4-6
80336 München (DE)**

(54) **INVERTER CONTROL DEVICE AND PROGRAM**

(57)     An inverter control device (70) includes: a determination section configured to determine whether a rise in temperature of a temperature-raising object is required; and a control section configured to perform, in response the rise in temperature being determined to be required, a temperature-raising control including a first mode and a second mode executed after the first mode. The first mode is a mode in which: in the plurality of phases, the upper arm switch section in a first specific phase is turned on while the upper arm switch section in a phase other than the first specific phase is turned off, the first specific phase being a part of the plurality of phases; and in the plurality of phases, the lower arm switch section in a second specific phase is turned on while the lower arm switch section in a phase other than the second specific phase is turned off, the second specific phase being at least one phase other than the first specific phase in the plurality of phases. The second mode is a mode in which: in the plurality of phases, the upper arm switch section in the first specific phase is turned on while the upper arm switch section in the phase other than the first specific phase is turned off; and the respective lower arm switch sections in the plurality of phases are turned off.

## FIG.2

## Description

[CROSS-REFERENCE TO RELATED APPLICATION]

This application is based on Japanese Patent Application No. 2022-102905 filed on June 27, 2022, the disclosure of which is incorporated herein by reference.

[Technical Field]

The present disclosure relates to an inverter control device and a program.

[Background Art]

There is a known technology in which heat is to be generated through a switching control of an inverter to raise a temperature of a temperature-raising object with the heat. For example, PTL 1 describes a technology in which a switching control of an inverter causes an electric power to be transmitted/received between a rotating electrical machine electrically connected to the inverter and a battery to raise a temperature of the battery, which is a temperature-raising object.

[Citation List]

[Patent Literature]

[PTL 1] JP 2014-72955 A

[Summary of the Invention]

In order to promptly raise a temperature of a temperature-raising object, it is desired to increase the amount of heat to be generated by a switching control of an inverter.
A main object of the present disclosure is to provide an inverter control device and a program that enable increasing the amount of heat to be generated by a switching control of an inverter.
The present disclosure is directed to an inverter control device applied to a system, the system including:

an inverter including: a series circuit constituted by an upper arm switch section and a lower arm switch section of each of a plurality of phases, and a diode section connected in antiparallel to each of the upper arm switch section and the lower arm switch section of each of the plurality of phases;
a rotating electrical machine including an armature winding electrically connected to the inverter; and
a heat transfer section configured to transfer heat generated by at least the inverter to a temperature-raising object, the inverter control device comprising:

a determination section configured to determine whether a rise in temperature of the temperature-raising object is required; and
a control section configured to perform, in response to the determination section determining that the rise in temperature is required, a temperature-raising control including a first mode and a second mode executed after the first mode, wherein
the first mode is a mode in which:

in the plurality of phases, the upper arm switch section in a first specific phase is turned on while the upper arm switch section in a phase other than the first specific phase is turned off, the first specific phase being a part of the plurality of phases; and
in the plurality of phases, the lower arm switch section in a second specific phase is turned on while the lower arm switch section in a phase other than the second specific phase is turned off, the second specific phase being at least one phase other than the first specific phase in the plurality of phases, and
the second mode is a mode in which:

in the plurality of phases, the upper arm switch section in the first specific phase is turned on while the upper arm switch section in the phase other than the first specific phase is turned off; and
the respective lower arm switch sections in the plurality of phases are turned off.

In the present disclosure, in response to a rise in temperature of a temperature-raising object being determined to be required, a temperature-raising control including a first mode and a second mode configured to be executed after the first mode is performed.

Setting the inverter in the first mode causes an electric current to flow through a closed circuit including the upper arm switch section in the first specific phase, the armature winding of the rotating electrical machine, and the lower arm switch section in the second specific phase with a magnetic energy accumulated in the armature winding.

Setting the inverter in the second mode causes an electric current to flow through a closed circuit including the upper arm switch section in the first specific phase, the armature winding, and the diode section connected in antiparallel to the upper arm switch section in, out of the phases, the phase other than the first specific phase. An on-resistance of the diode section is larger than an on-resistance of the switch section. The amount of heat to be generated by an electric current flowing in a forward direction through the diode section is thus larger than the amount of heat to be generated by an electric current flowing through the switch section that is turned on. Therefore, the present disclosure enables increasing the amount of heat to be generated by the switching control of the inverter. Accordingly, heat generated by the inverter is transferred to the temperature-raising object through the heat transfer section, which makes it possible to promptly raise the temperature of the temperature-raising object.

[Brief Description of the Drawings]

The above and other objects, features, and advantages of the present disclosure will become more apparent from the following detailed description made with reference to the accompanying drawings. The drawings are as follows.

Fig. 1 is an overall configuration diagram of an in-vehicle control system according to a first embodiment.
Fig. 2 is a schematic diagram of a cooling system serving as a heat transfer section.
Fig. 3 is a diagram illustrating a relationship between a current flowing through a switch section and a body diode that are turned on and the amount of voltage drop.
Fig. 4 is a flowchart illustrating a process sequence of a temperature-raising control.
Fig. 5 is a diagram illustrating an example of a current flow path when a switch electrically continuous mode is a mode A.
Fig. 6 is a diagram illustrating an example of the current flow path when the switch electrically continuous mode is a mode B.
Fig. 7 is a diagram illustrating an example of the current flow path when a diode electrically continuous mode is a mode 1.
Fig. 8 is a diagram illustrating an example of the current flow path when the diode electrically continuous mode is a mode 2.
Fig. 9 is a diagram illustrating an example of the current flow path when the diode electrically continuous mode is a mode 3.
Fig. 10 is a diagram illustrating an example of the current flow path when the diode electrically continuous mode is a mode 4.
Fig. 11 is a flowchart illustrating a process sequence of a temperature-raising control according to a second embodiment.
Fig. 12 is a diagram illustrating an example of the current flow path when the diode electrically continuous mode is the mode 1.
Fig. 13 is a diagram illustrating an example of the current flow path when the diode electrically continuous mode is the mode 2.
Fig. 14 is a diagram illustrating an example of the current flow path when a diode electrically continuous mode is the mode 1 according to a third embodiment.
Fig. 15 is a diagram illustrating an example of the current flow path when the diode electrically continuous mode is the mode 2.
Fig. 16 is a diagram illustrating an example of the current flow path when the diode electrically continuous mode is the mode 3.
Fig. 17 is a diagram illustrating an example of the current flow path when the diode electrically continuous mode is the mode 4.
Fig. 18 is a schematic diagram of a cooling system according to another embodiment.
Fig. 19 is a schematic diagram of a cooling system according to another embodiment.
Fig. 20 is a schematic diagram of a cooling system according to another embodiment.
Fig. 21 is a schematic diagram of a cooling system according to another embodiment.

[Description of Embodiments]

<First Embodiment>

Description will be made below on a first embodiment, in which an inverter control device according to the present disclosure is embodied, with reference to the drawings. An electric power converter device of the present embodiment is installed to a vehicle such as an electric vehicle, a hybrid vehicle, or the like.

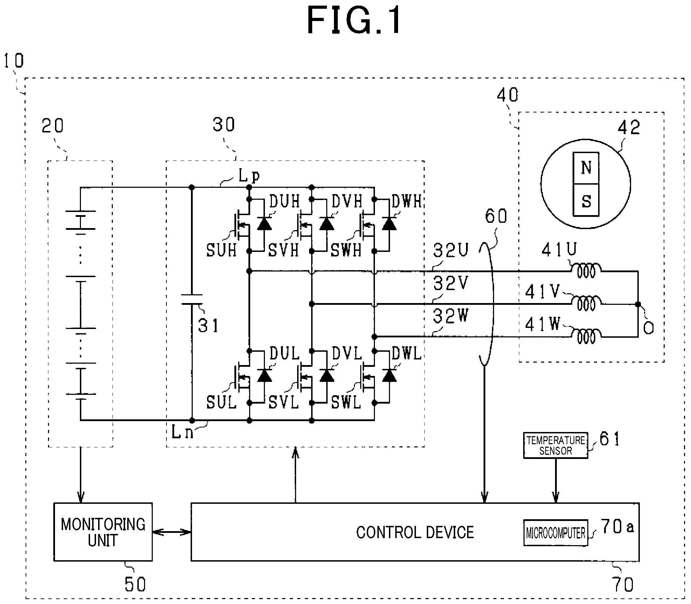

As illustrated in Fig. 1, a vehicle 10 includes a storage battery 20, an inverter 30, and a rotating electrical machine 40. The rotating electrical machine 40, which is a three-phase synchronous machine, includes U-, V-, W-phase windings 41U, 41V, 41W, which are star-connected armature windings, and a rotor 42. The phase windings 41U, 41V, 41W are arranged with an offset of an electric angle of 120° therebetween. The rotating electrical machine 40 is, for example, a permanent magnet synchronous machine. The rotor 42 is able to transfer a power to a drive wheel of the vehicle 10. The rotating electrical machine 40 thus serves as a traveling power source for the vehicle 10.

The inverter 30 includes constitute a series circuit constituted by an upper arm switch section SUH and a lower arm switch section SUL of U-phase, a series circuit constituted by an upper arm switch section SVH and a lower arm switch section SVL of V-phase, and a series circuit constituted by an upper arm switch section SWH and a lower arm switch section SWUL of W-phase. The upper arm switch sections SUH, SVH, SWH are connected in antiparallel to upper arm body diodes DUH, DVH, DWH corresponding to "diode sections". The lower arm switch sections SUL, SVL, SWL are connected in antiparallel to lower arm body diodes DUL, DVL, DWL corresponding to "diode sections". The switch section and the body diode form an N-channel MOSFET. With the switch section turned on, a flow of an electric current from drain, which is a high-potential terminal, to source, which is a low-potential terminal, and a flow of an electric current from the source to the drain are permitted. Meanwhile, with the switch section turned off, the flows of the electric current in both directions between the drain and the source in the switch sections are blocked while the flow of the electric current in a forward direction in the body diode is permitted.

A first end of the U-phase winding 41U is connected to the source of the U-phase upper arm switch section SUH and the drain of the U-phase lower arm switch section SUL through a U-phase electrically conductive member 32U such as a bus-bar. A first end of the V-phase winding 41V is connected to the source of the V-phase upper arm switch section SVH and the drain of the V-phase lower arm switch section SVL through a V-phase electrically conductive member 32V such as a bus-bar. A first end of the W-phase winding 41W is connected to the source of the W-phase upper arm switch section SWH and the drain of the W-phase lower arm switch section SWL through a W-phase electrically conductive member 32W such as a bus-bar. Respective second ends of the U-, V-, W-phase windings 41U, 41V, 41W are connected together at a neutral point O. It should be noted that respective numbers of turns of the phase windings 41U, 41V, 41W are set the same in the present embodiment. Thus, for example, respective inductances of the phase windings 41U, 41V, 41W are set the same.

The drain of each of the upper arm switch sections SUH, SVH, SWH is connected to a positive electrode terminal of the storage battery 20 through a positive electrode bus line Lp such as a bus-bar. The source of each of the lower arm switch sections SUL, SVL, SWL is connected to a negative electrode terminal of the storage battery 20 through a negative electrode bus line Ln such as a bus-bar.

The inverter 30 includes a capacitor 31 connecting the positive electrode bus line Lp and the negative electrode bus line Ln. It should be noted that the capacitor 31 may be provided outside the inverter 30.

The storage battery 20 is an assembled battery configured as a series-connected body of battery cells that are single batteries. Respective terminal voltages (for example, rated voltages) of the battery cells forming the assembled battery are, for example, set the same as each other. The battery cells are, for example, secondary batteries such as lithium-ion batteries. The storage battery 20 may be charged using an external charger provided outside the vehicle 10. The external charger is, for example, a stationary charger.

The vehicle 10 includes a monitoring unit 50. The monitoring unit 50 detects a terminal voltage, SOC, SOH, temperature, and the like of each of the battery cells forming the storage battery 20. Detection information from the monitoring unit 50 is to be inputted to a control device 70 installed in the vehicle 10.

The vehicle 10 includes a phase current sensor 60 and a temperature sensor 61. The phase current sensor 60 detects phase currents for at least two phases. The phase current sensor 60 detects, for example, electric currents flowing through, out of the electrically conductive members 32U to 32W, at least electrically conductive members for two phases. The temperature sensor 61 detects a temperature of each of the switch sections SUH to SWL forming the inverter 30. Detection values from each of the sensors 60, 61 are supplied to the control device 70.

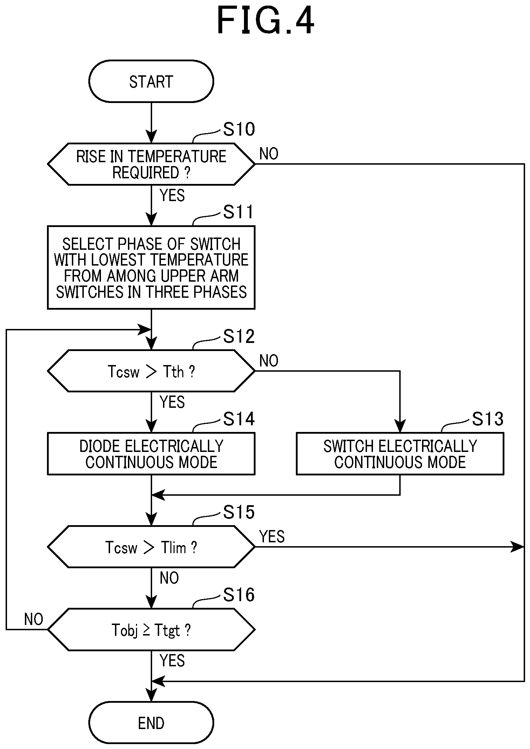

The control device 70 mainly consists of a microcomputer 70a and the microcomputer 70a includes a CPU. A function to be provided by the microcomputer 70a may be provided by software recorded in a tangible memory device and a computer that executes the software, software only, hardware only, or a combination thereof. For example, in a case where the microcomputer 70a is provided by an electronic circuit, which is hardware, the electronic circuit may be provided by a digital circuit including a large number of logic circuits or an analog circuit. For example, the microcomputer 70a executes a program stored in an own storage section, which may be a non-transitory tangible storage medium. The program includes, for example, a program of a process illustrated in later-described Fig. 4 or the like. As the program is executed, a method corresponding to the program is performed. The storage section is, for example, a non-volatile memory. It should be noted that the program stored in the storage section may be updated via a communication network such as the internet, such as OTA (Over The Air).

The control device 70 performs, on the basis of the detection value from the phase current sensor 60, a switching control of each of the switches forming the inverter 30 so as to perform a feedback control of a control amount of the rotating electrical machine 40 into an instruction value. In the present embodiment, the control amount is torque. For each phase, the upper arm switch section and the lower arm switch section are to be alternately turned on. A rotative power of the rotor 42 is to be transferred to the drive wheels through the feedback control, causing the vehicle 10 to travel.

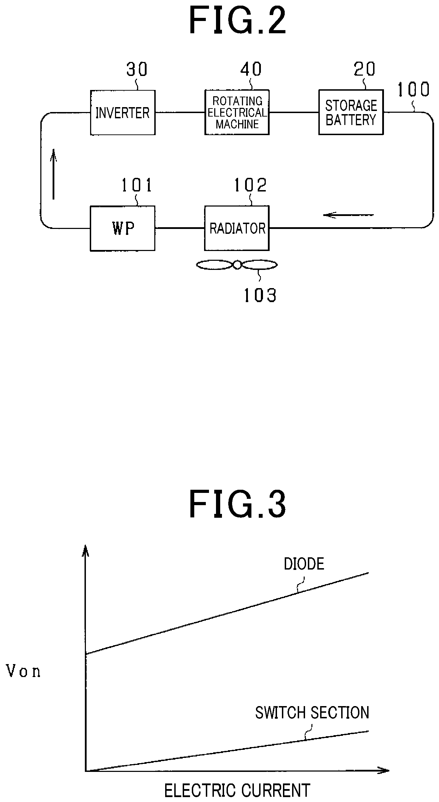

As illustrated in Fig. 2, in a case where the switching control of the inverter 30 is to be performed to cause the vehicle 10 to travel, the vehicle 10 includes a device that cools the inverter 30, the rotating electrical machine 40, and the storage battery 20. In detail, the vehicle 10 includes a circulation path 100 where a coolant water is to be circulated, a motorized water pump 101, a radiator 102, and a motorized fan 103. When powered, the water pump 101 is driven to cause the coolant water to circulate. In the circulation path 100, the inverter 30, the rotating electrical machine 40, and the storage battery 20 are disposed in this order downstream of the water pump 101.

In the circulation path 100, the radiator 102 is provided between the water pump 101 and the storage battery 20. The radiator 102 cools the coolant water entering through the circulation path 100 and supplies the coolant water to the water pump 101. The coolant water entering the radiator 102 is to be cooled by traveling wind applied to the radiator 102 during the traveling of the vehicle 10 and wind applied to the radiator 12 as the fan 103 is rotated.

It should be noted that the water pump 101 and the fan 103 may be driven by a control device different from the control device 70. However, in the present embodiment, it is assumed that the water pump 101 and the fan 103 are to be driven by the control device 70, for the purpose of convenience.

Subsequently, description will be made on a temperature-raising control of the storage battery 20 that is to be performed by the control device 70. This control is a control that causes heat to be generated by the switching control of the inverter 30 in response to a temperature of the storage battery 20, which is detected by the monitoring unit 50, falling below a target temperature Ttgt in charging the storage battery 20 using the external charger while the vehicle 10 is stopped. The generated heat is transferred to the storage battery 20 via the coolant water caused to circulate through the circulation path 100 by the driving of the water pump 101. The temperature-raising control is continued until, for example, the temperature of the storage battery 20 reaches the target temperature Ttgt. Moreover, the driving of the water pump 101 is continued at least while the temperature-raising control is performed. It should be noted that the circulation path 100, the coolant water circulating through the circulation path 100, and the water pump 101 correspond to a "heat transfer section" in the present embodiment.

As the temperature-raising control is performed, the temperature of the switch section switched in the inverter 30 rises. The continuance of the temperature-raising control with the temperature of the switch section being high may lower the reliability of the switch section.

Here, as will be seen from current-voltage characteristics illustrated in Fig. 3, an on-resistance of the body diode is larger than an on-resistance of the switch section. Thus, the amount of heat to be generated by an electric current flowing in a forward direction through the body diode is larger than the amount of heat to be generated by an electric current flowing thorough the switch section that is turned on. Accordingly, with use of the above characteristics, the present embodiment enables increasing the amount of heat to be generated by the switching control of the inverter 30 as much as possible even in a case where the temperature of the switch section becomes high after the start of the temperature-raising control. This makes it possible to promptly increase the temperature of the storage battery 20 to shorten a charging time for the storage battery 20 to be charged using the external charger.

Fig. 4 is a flowchart illustrating a process sequence of the temperature-raising control to be performed by the control device 70. This process is to be performed in response to, for example, the control device 70 determining that the charging of the storage battery 20 using the external charger is started.

In Step S10, it is determined whether a rise in temperature of the storage battery 20 is required. In the present embodiment, it is determined that a rise in temperature is required in response to the temperature of the storage battery 20 detected by the monitoring unit 50 falling below the target temperature Ttgt. It should be noted that the process in Step S10 corresponds to a "determination section" in the present embodiment.

In response to a rise in temperature being determined to be required in Step S10, the process proceeds to Step S11. In Step S11, the temperatures of the upper arm switch sections SUH to SWH for three phases detected by the temperature sensor 61 are acquired. Then, the phase with the lowest one of the acquired temperatures for the three phases is selected as a first specific phase. Hereinbelow, description will be made on a case where the U-phase is selected as the first specific phase for the purpose of convenience. Moreover, the temperature of the upper arm switch section in the first specific phase is referred to as a specific switch temperature Tcsw.

In Step S12, it is determined whether the specific switch temperature Tcsw (specifically, the temperature of the U-phase upper arm switch section SUH) exceeds a temperature threshold Tth. The process in Step S12 is a process for determining which one of a switch electrically continuous mode and a diode electrically continuous mode is to be executed during the temperature-raising control. The temperature threshold Tth is set at a lower value than an allowable upper limit temperature for the reliability of the switch section to be maintainable.

In response to the specific switch temperature Tcsw being determined to be equal to or less than the temperature threshold Tth in Step S12, the process proceeds to Step S13 and the execution of the switch electrically continuous mode is started. The switch electrically continuous mode refers to a switching control of the inverter 30 to alternately repeat a mode A and a mode B. The mode A is a mode in which the upper arm switch section in the first specific phase out of the three phases is turned on while the upper arm switch sections in the phases other than the first specific phase are turned off, and the lower arm switch section in a second specific phase, which is at least one of the phases other than the first specific phase, is turned on while the lower arm switch sections in the phases other than the second specific phase are turned off. In the present embodiment, two of the phases are selected as the second specific phases.

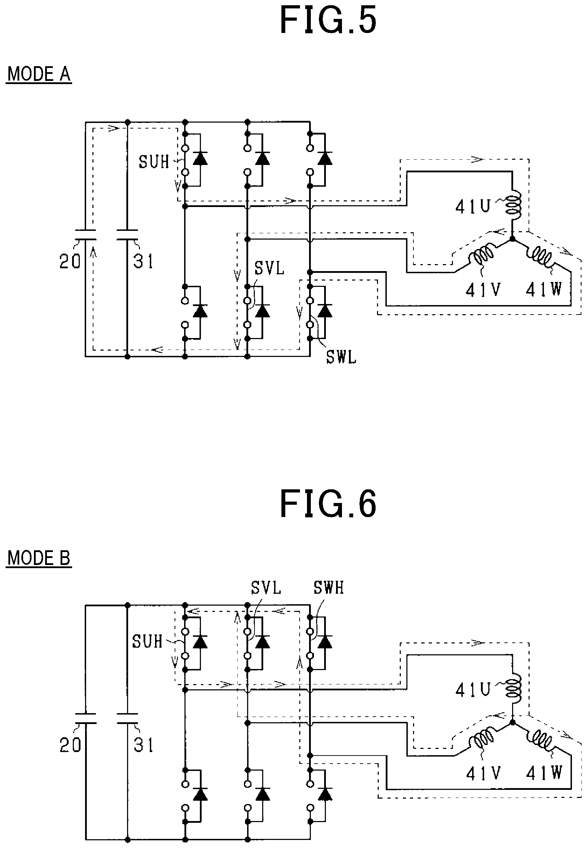

Fig. 5 illustrates a current flow path in the mode A in a case where the U-phase is selected as the first specific phase. In Fig. 5, an illustration of a part of the reference signs of the switch sections that are turned off is omitted and the reference sign of a part of components is omitted. In an example illustrated in Fig. 5, the upper arm switch section SUH in the U-phase, which is the first specific phase, is turned on while the upper arm switch sections SVH, SWH in the V- and W-phases are turned off, and the lower arm switch sections SVL, SWL in the V- and W-phases, which are the second specific phases, are turned on while the lower arm switch section SUL in the U-phase is turned off. This causes an electric current to flow through a closed circuit including the storage battery 20, the U-phase upper arm switch section SUH, the U-phase winding 41U, the V-phase winding 41V, and the V-phase lower arm switch section SVL and a closed circuit including the storage battery 20, the U-phase upper arm switch section SUH, the U-phase winding 41U, the W-phase winding 41W, and the W-phase lower arm switch section SWL. As a result, magnetic energy is accumulated in each of the phase windings 41U to 41W.

The mode B is a mode in which the upper arm switch sections in the first and second specific phases out of the three phases are turned on and the lower arm switch sections in the three phases are turned off.

Fig. 6 illustrates an example in which the upper arm switch section SUH in the U-phase, which is the first specific phase, and the upper arm switch sections SVH, SWH in the V- and W-phases, which are the second specific phases, are turned on while the lower arm switch sections SUL, SVL, SWL in the U-, V-, W-phases are turned off. The accumulated magnetic energy causes an electric current to continue to flow through a closed circuit including the U-phase upper arm switch section SUH, the U-phase winding 41U, the V-phase winding 41V, and the V-phase upper arm switch section SVH and a closed circuit including the U-phase upper arm switch section SUH, the U-phase winding 41U, the W-phase winding 41W, and the W-phase upper arm switch section SWH.

Referring back to the preceding description on Fig. 4, in response to the specific switch temperature Tcsw being determined to exceed the temperature threshold Tth in Step S12, the process proceeds to Step S14 and the execution of the diode electrically continuous mode is started. The diode electrically continuous mode is a switching control of the inverter 30 to repeat one cycle in which a first mode, a second mode, a third mode, and a fourth mode appear in this order. It should be noted that the process in Step S14 provides a "control section" in the present embodiment.

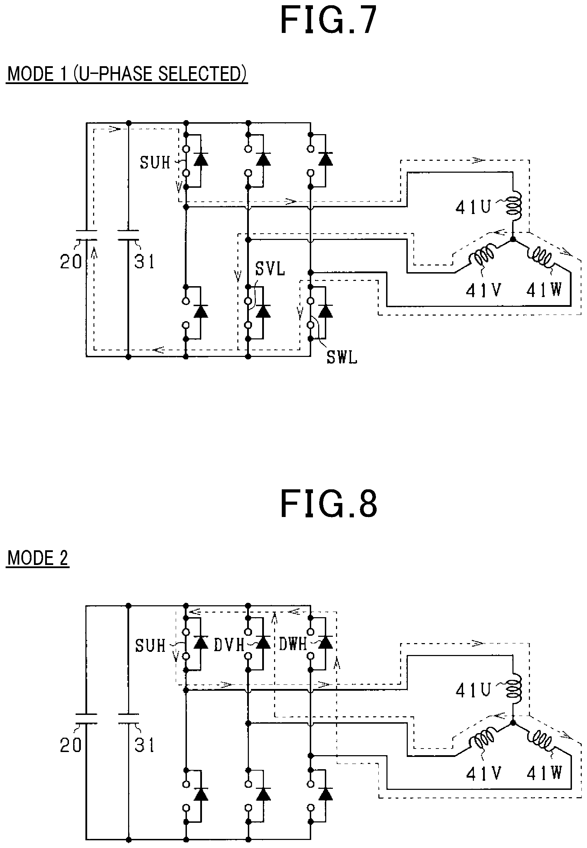

The first mode is a mode in which the upper arm switch section in the first specific phase out of the three phases is turned on while the upper arm switch sections in the phases other than the first specific phase are turned off, and the lower arm switch section in the second specific phase out of the three phases is turned on while the lower arm switch sections in the phases other than the second specific phase are turned off. Fig. 7 illustrates an example in which the upper arm switch section SUH in the U-phase, which is the first specific phase, is turned on while the upper arm switch sections SVH, SWH in the V- and W-phases other than the first specific phase are turned off, and the lower arm switch sections SVL, SWL in the V- and W-phases, which are the second specific phases, are turned on while the lower arm switch section SWL in the U-phase other than the second specific phases is turned off.

The second mode is a mode in which the upper arm switch section in the first specific phase out of the three phases is turned on while the upper arm switch sections in the phases other than the first specific phase are turned off, and the lower arm switch sections in the three phases are turned off. Fig. 8 illustrates an example in which the upper arm switch section SUH in the U-phase, which is the first specific phase, is turned on while the upper arm switch sections SVH, SWH in the V- and W-phases other than the first specific phase are turned off, and the lower arm switch sections SUL, SVL, SWL in the three phases are turned off. The magnetic energy accumulated in the mode 1 causes an electric current to continue to flow through a closed circuit including the U-phase upper arm switch section SUH, the U-phase winding 41U, the V-phase winding 41V, and the V-phase upper arm body diode DVH and a closed circuit including the U-phase upper arm switch section SUH, the U-phase winding 41U, the W-phase winding 41W, and the W-phase upper arm body diode DWH. Unlike in the mode 2 of the switch electrically continuous mode, the electric current flows through not each of the switch sections SVH, SWH but each of the body diodes DVH, DWH with a larger on-resistance, which makes it possible to favorably increase a calorific value.

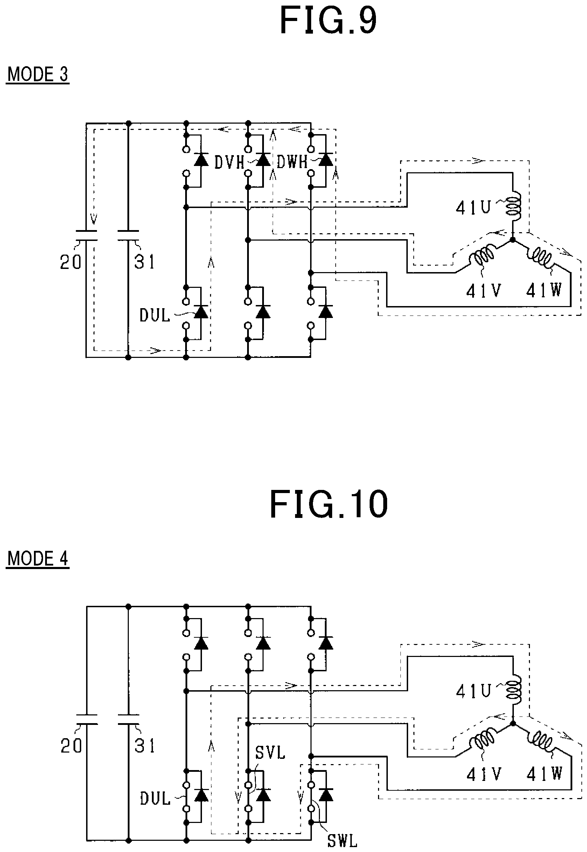

The third mode is a mode in which the upper arm switch sections SUH, SVH, SWH in the three phases and the lower arm switch sections SUL, SVL, SWL in the three phases are turned off as illustrated in Fig. 9. In this case, an electric current continues to flow through a closed circuit including the storage battery 20, the U-phase lower arm body diode DUL, the U-phase winding 41U, the V-phase winding 41V, and the V-phase upper arm body diode DVH and a closed circuit including the storage battery 20, the U-phase lower arm body diode DUL, the U-phase winding 41U, the W-phase winding 41W, and the W-phase upper arm body diode DWH. The electric current flows thorough each of the body diodes DUL, DVH, DWH, which makes it possible to favorably increase a calorific value.

The fourth mode is a mode in which the upper arm switch sections in the three phases are turned off, and the lower arm switch section in the second specific phase out of the three phases is turned on while the lower arm switch sections in the phases other than the second specific phase are turned off. Fig. 10 illustrates an example in which the upper arm switch sections SUH, SVH, SWH in the three phases are turned off, and the lower arm switch sections SVL, SWL in the V- and W-phases, which are the second specific phases, are turned on while the lower arm switch section SUL in the U-phase other than the second specific phases is turned off. In this case, an electric current continues to flow through a closed circuit including the U-phase lower arm body diode DUL, the U-phase winding 41U, the V-phase winding 41V, and the V-phase lower arm switch section SVL and a closed circuit including the U-phase lower arm body diode DUL, the U-phase winding 41U, the W-phase winding 41W, and the W-phase lower arm switch section SWL. The electric current flows through the U-phase lower arm body diode DUL, which makes it possible to favorably increase a calorific value.

After the execution of the fourth mode, the first mode is executed again. A repeat of the first to fourth modes makes it possible to switch between a mode to cause the electric current to circulate through the armature windings and an upper-arm side of the inverter 30 and a mode to cause the electric current to circulate through the armature windings and a lower-arm side of the inverter 30. As a result, it is possible to avoid a concentrated flow of the electric current in a specific switch section and favorably increase a calorific value.

Referring back to the preceding description on Fig. 4, it is determined whether the specific switch temperature Tcsw exceeds a temperature limit Tlim (>Tth) in Step S15. The temperature limit Tlim is set at a value higher than the temperature threshold Tth, for example, the same value as the above-described allowable upper limit temperature or a value slightly lower than the allowable upper limit temperature. In response to the specific switch temperature Tcsw being determined to exceed the temperature limit Tlim in Step S15 during the execution of the switch electrically continuous mode or the diode electrically continuous mode, the temperature-raising control is stopped by stopping the switching control of each of the switch sections of the inverter 30. The occurrence of overheating abnormality of the inverter 30 is thus avoided.

In response to the specific switch temperature Tcsw being determined to be equal to or less than the temperature limit Tlim in Step S15, the process proceeds to Step S16 to determine whether a temperature Tobj of the temperature-raising object reaches the target temperature Ttgt. In the present embodiment, since the temperature-raising object is the storage battery 20 as described above, the temperature Tobj of the temperature-raising object is the temperature of the storage battery 20.

In response to the temperature of the storage battery 20 being determined to be lower than the target temperature Ttgt in Step S16, the process proceeds to Step S12. In contrast, in response to the temperature of the storage battery 20 being determined to reach the target temperature Ttgt, the temperature-raising control is stopped. It should be noted that the process in Steps S11 to S16 corresponds to the "control section" in the present embodiment.

In the example in the present embodiment, the first specific phase and the second specific phase are fixed, by way of example, fixed at the U-phase, during a period of time until the temperature-raising control is stopped after a positive determination is made in Step S10. In this case, it is possible to increase the amount of generated heat and prevent the rotor 42 of the rotating electrical machine 40 from rotating due to the switching control of the inverter 30.

Incidentally, in order to reduce a decrease in temperature of the coolant water in the circulation path 100, the rotary drive of the fan 103 may be stopped while the temperature-raising control is performed.

The present embodiment described above in detail makes it possible to favorably increase a calorific value even in a situation where a switch section is subject to a thermal restriction such as the specific switch temperature Tcsw exceeding the temperature threshold Tth. Accordingly, heat generated by the inverter 30 and the rotating electrical machine 40 (for example, the armature winding) is transferred to the storage battery 20 through the circulation path 100, which makes it possible to promptly raise the temperature of the storage battery 20. Therefore, it is possible to shorten the charging time of the storage battery 20.

<Second Embodiment>

A second embodiment will be described below with a focus on a difference from the first embodiment with reference to the drawings. In the present embodiment, in response to the specific switch temperature Tcsw exceeding the temperature limit Tlim while the temperature-raising control is performed, out of the remaining two phases, the phase where the temperature of the upper arm switch section is lower is selected as the first specific phase.

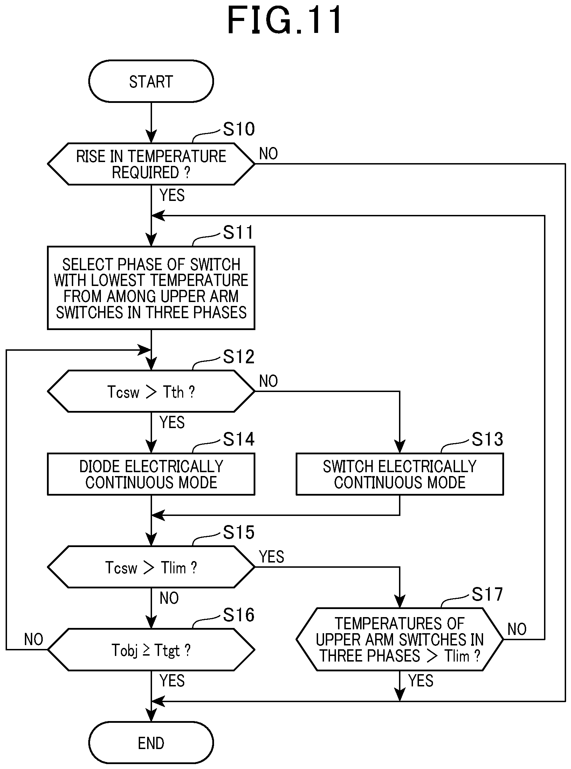

Fig. 11 is a flowchart illustrating a process sequence of a temperature-raising control to be performed by the control device 70. This process is to be performed in response to, for example, the control device 70 determining that the charging of the storage battery 20 using the external charger is started. It should be noted that the same process as the process illustrated in preceding Fig. 4 is labeled with the same reference sign for the purpose of convenience.

In response to the specific switch temperature Tcsw being determined to exceed the temperature limit Tlim in Step S15, the process proceeds to Step S17. In Step S17, it is determined whether the temperatures of the upper arm switch sections in the three phases exceed the temperature limit Tlim. In response to a positive determination made in Step S17, the temperature-raising control is stopped by stopping each of the switch sections of the inverter 30.

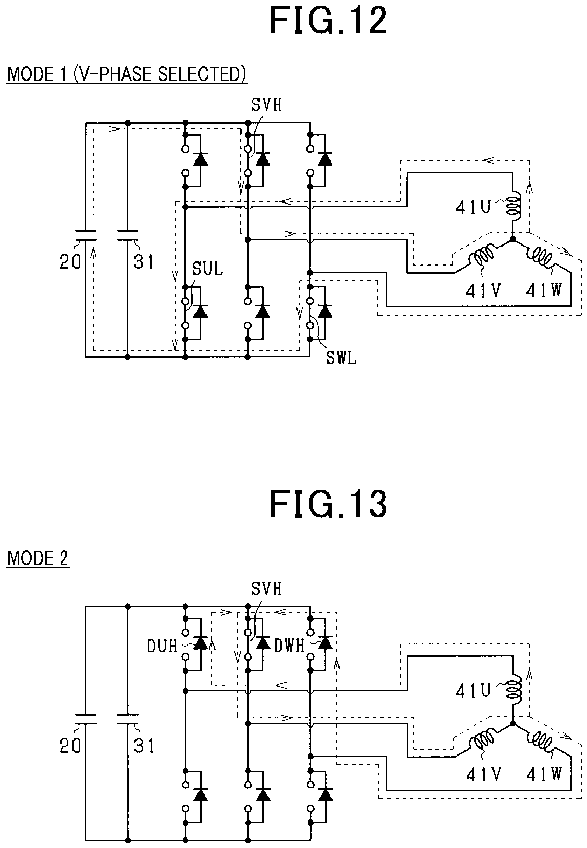

In contrast, in response to the temperature of the upper arm switch section in at least one of the phases being determined to be equal to or less than the temperature limit Tlim in Step S17, the process proceeds to Step S11. In Step S11, the phase with the lowest one of the temperatures of the upper arm switch sections SUH to SWH in the three phases is selected as the first specific phase. The temperature of the upper arm switch section in the selected first specific phase is equal to or less than the temperature limit Tlim. It should be noted that Fig. 12 illustrates an implementation of the mode 1 in which the V-phase is selected as the first specific phase and Fig. 13 illustrates an implementation of the mode 2 in which the V-phase is selected as the first specific phase.

Incidentally, the control device 70 may perform the switching control of the inverter 30 so that a torque generated by the rotating electrical machine 40 becomes a torque that does not cause the drive wheel of the stopped vehicle 10 to start rotating while the temperature-raising control is performed. Moreover, in order that no wheel of the vehicle 10 may start rotating while the temperature-raising control is performed, the control device 70 may cause a mechanical braking device installed in the vehicle 10 to apply a braking torque to the wheel.

The present embodiment described above enables heat generated by the inverter 30 as a result of performing the temperature-raising control to be distributed among the phases.

<Third Embodiment>

A third embodiment will be described below with a focus on a difference from the first and second embodiments with reference to the drawings. In the present embodiment, the upper and lower arm switch sections in one of the three phases are kept off while the temperature-raising control is performed. In the present embodiment, the upper and lower arm switch sections in the W-phase are kept off. The upper and lower arm switch sections are kept off so as to increase a calorific value resulting from the switching control. The reason why the calorific value is able to be increased will be described by taking the mode 2 as an example.

In preceding Fig. 8, I denotes an electric current (a drain current Ids) flowing through the U-phase upper arm switch section SUH. In this case, an electric current of I/2 flows through each of the upper arm body diodes DVH, DWH in the V- and W-phases. For the purpose of simplifying the description, it is assumed that the on-resistance of the U-phase upper arm switch section SUH and the on-resistances of the V- and W-phase upper arm body diodes DVH, DWH are the same value R. In this case, a total amount of heat W1 per unit of time to be generated by the U-phase upper arm switch section SUH and V- and W-phase upper arm body diodes DVH, DWH is represented by Expression (eq1) below.

[Equation. 1]

$$W1 = (R \times I^2) + 2 \times \left( R \times \left( \frac{I}{2} \right)^2 \right) = \frac{3}{2} R I^2 \ \dots \ (eq1)$$

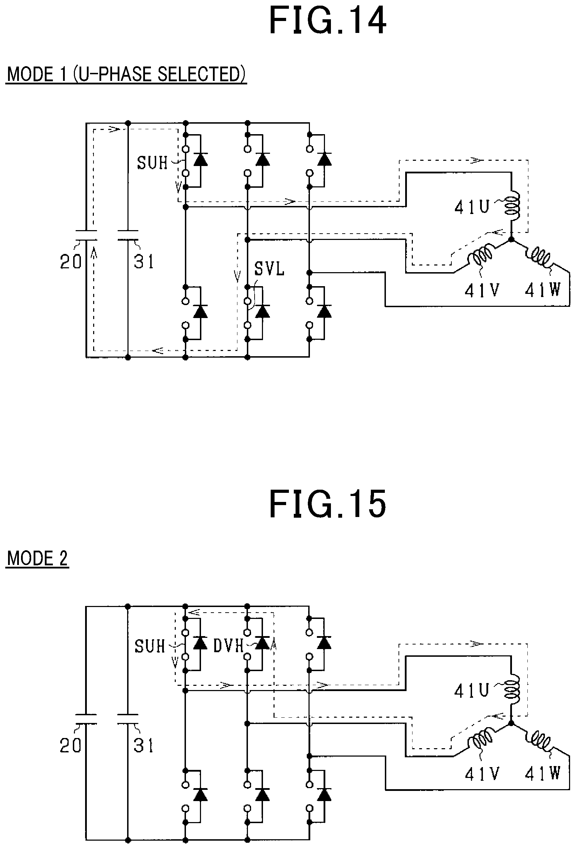

Meanwhile, Fig. 15 illustrates an implementation of the mode 2 of the present embodiment. In this case, an electric current of I flows through the V-phase upper arm body diode DVH. A total amount of heat W2 per unit of time to be generated by the U-phase upper arm switch section SUH and the V-phase upper arm body diode DVH is represented by Expression (eq2) below.

[Equation. 2]

$$W2 = (R \times I^2) + (R \times I^2) = 2 R I^2 \ \dots \ (eq2)$$

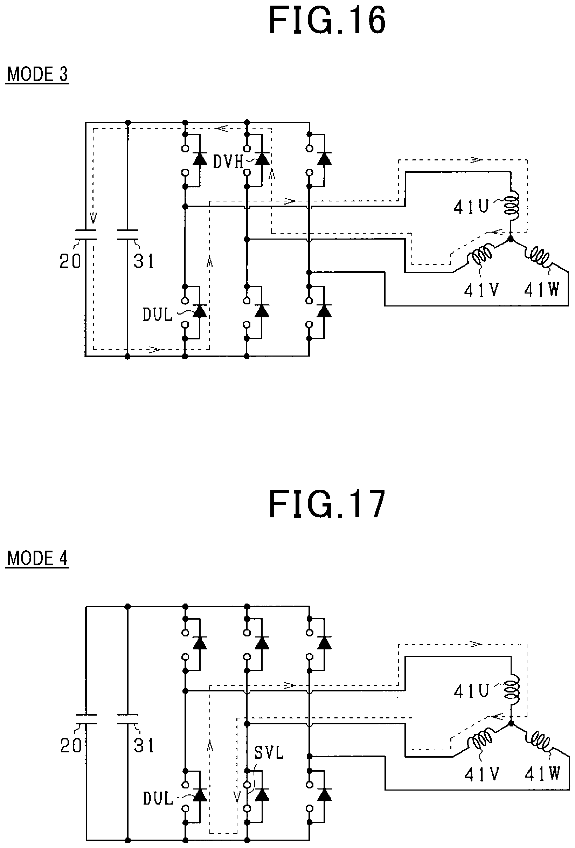

Since W2 > W1, the calorific value in the present embodiment is larger. Fig. 14 to Fig. 17 illustrate implementations of the modes 1 to 4 of the diode electrically continuous mode in the present embodiment.

Incidentally, in the switch electrically continuous mode, the upper and lower arm switch sections in one of the three phases may also be kept off.

The present embodiment described above enables increasing the calorific value resulting from the temperature-raising control.

**EP 4 546 635 A1**

<Other Embodiments>

It should be noted that the above-described embodiments may be modified as follows.

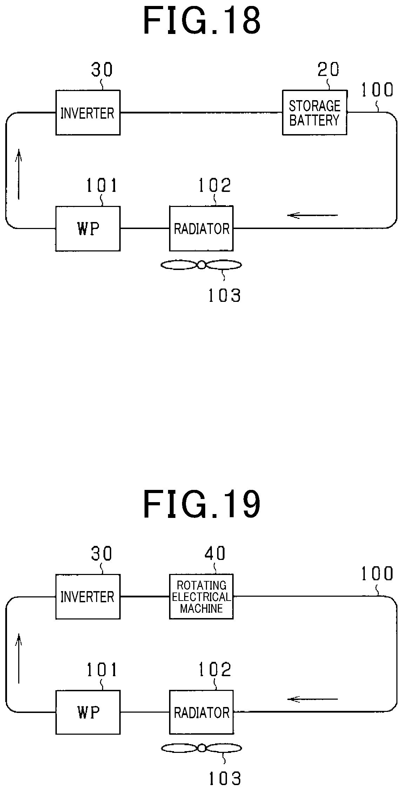

- The cooling device is not limited to one illustrated in Fig. 2. For example, the rotating electrical machine 40 may be omitted from the cooling objects as illustrated in Fig. 18 or the storage battery 20 may be omitted from the cooling objects as illustrated in Fig. 19. In a case where the storage battery 20 is omitted from the cooling objects, the temperature-raising object to be subjected to the temperature-raising control may be, for example, the coolant water in the circulation path 100. In a case where the vehicle is equipped with an air conditioner in which the coolant water is used as a heat source for in-vehicle heating, the temperature-raising control enables promptly raising a temperature of the heat source for heating.

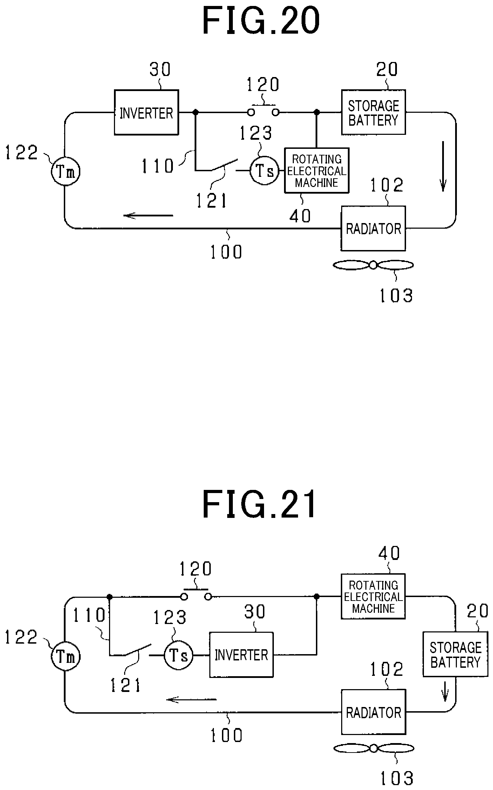

Moreover, the cooling device may be one illustrated in Fig. 20. This cooling device includes a bypass path 110, a first valve section 120, a second valve section 121, a main temperature sensor 122, and a bypass temperature sensor 123. It is assumed that the first valve section 120 and the second valve section 121 are to be driven by the control device 70.
The first valve section 120 is provided in the circulation path 100 between the inverter 30 and the storage battery 20. The bypass path 110 is connected to the circulation path 100 in a manner to bypass the first valve section 120. In the bypass path 110, the second valve section 121, the bypass temperature sensor 123, and the rotating electrical machine 40 are provided in this order from the upstream. The bypass temperature sensor 123 detects a temperature of the coolant water in the bypass path 110 between the second valve section 121 and the rotating electrical machine 40. The main temperature sensor 122 is provided in the circulation path 100 between the inverter 30 and the radiator 102 to detect the temperature of the coolant water. Detection values from the main temperature sensor 122 and the bypass temperature sensor 123 are to be inputted to the control device 70.
In response to determining that a temperature (hereinafter, main temperature Tm) of the coolant water detected by the main temperature sensor 122 is higher than a temperature (hereinafter, bypass temperature Ts) of the coolant water detected by the bypass temperature sensor 123 while the temperature-raising control is performed, the control device 70 puts the first valve section 120 into an opened state and the second valve section 121 into a closed state. This causes a flow of the coolant water in the bypass path 110 at a portion corresponding to the second valve section 121 to be blocked by the second valve section 121 and thus no coolant water flows through the bypass path 110. As a result, it is possible to reduce the absorption of heat generated by the inverter 30 through the temperature-raising control into the rotating electrical machine 40 via the coolant water, which contributes to an improvement in a temperature-raising performance for the storage battery 20.
After that, the temperature-raising control is continued and the control device 70 puts, in response to determining that the main temperature Tm becomes the bypass temperature Ts or less, the first valve section 120 into a closed state and the second valve section 121 into an opened state. This causes a flow of the coolant water in the circulation path 100 at a portion corresponding to the first valve section 120 to be blocked by the first valve section 120 and thus the coolant water flows through the bypass path 110. As a result, it is possible to transfer heat generated by the inverter 30 and the rotating electrical machine 40 through the temperature-raising control to the coolant water, which contributes to an improvement in the temperature-raising performance for the storage battery 20.
It should be noted that the cooling device may be one illustrated in Fig. 21 in place of the one illustrated in Fig. 20. In this case, the bypass temperature sensor 123 detects a temperature of the coolant water in the bypass path 110 between the second valve section 121 and the inverter 30. The main temperature sensor 122 detects a temperature of the coolant water in the circulation path 100 between a connection portion with the bypass path 110 and the radiator 102. It should be noted that in the case in Fig. 21, the first valve section 120 and the second valve section 121 may be driven by the control device 70 in the same method as in the case in Fig. 20.

- The heat transfer section is not limited to a section in which the coolant water is used as a coolant fluid and may be, for example, an air-cooling section in which gas (air) is used as the coolant fluid.
- In Fig. 2 and Fig. 18 to Fig. 21, an order of arrangement of the inverter, the rotating electrical machine, the storage battery, and electric equipment electrically connected to the storage battery in the circulation path is not limited to one illustrated in the drawing. For example, in the configuration illustrated in Fig. 2, the water pump, the inverter, the storage battery, and the rotating electrical machine may be arranged in this order.

Moreover, in an electrically driven system including two rotating electrical machines (first and second rotating electrical machines) and inverters (first and second inverters) electrically connected to the respective rotating electrical machines, for example, the water pump, the first inverter, the first rotating electrical machine, the second inverter, the second rotating electrical machine, and the storage battery may be arranged in this order.
Moreover, in a case where a DCDC converter is installed as the electric equipment in the system, for example, the water pump, the DCDC converter, the inverter, the rotating electrical machine, and the storage battery are arranged in this order.

- In the diode electrically continuous mode, the first mode and the second mode may be alternately and repeatedly executed without using either the third or fourth mode.

Moreover, in the diode electrically continuous mode, a switching control of the inverter 30 where one cycle is to be repeated may be performed. In the one cycle, the first mode, the second mode, and the third mode are to appear in this order without using the fourth mode. In this case, it is also possible to favorably increase the calorific value and shorten the charging time of the storage battery 20.

- An external freewheeling diode may be connected in antiparallel to the N-channel MOSFET including the switch section and the body diode. In this case, the body diode and the freewheeling diode correspond to the "diode section".
- The rotating electrical machine is not limited to a star-connected machine and may be a machine with a delta-connected machine. Moreover, as for the rotating electrical machine and the inverter, the number of phases is not limited to three and may be two or four or more.
- An electricity storage section connected to the inverter is not limited to a storage battery and may be, for example, a high-capacity electric double layer capacitor, or may include both a storage battery and an electric double layer capacitor.
- A moving body to be installed with the inverter control device is not limited to a vehicle and may be, for example, an aircraft or a ship. Moreover, the inverter control device may be mounted not only to a moving object but also to a stationary device.
- The control section according to the present disclosure and measures thereof may be implemented by a dedicated computer including a processor programmed to execute one or a plurality of functions embodied by a computer program and a memory. Alternatively, the control section according to the present disclosure and the measures thereof may be implemented by a dedicated computer including a processor including one or more dedicated hardware logic circuits. Further alternatively, the control section according to the present disclosure and the measures thereof may be implemented by one or more dedicated computers including a combination of a processor programmed to execute one or a plurality of functions and a memory and a processor including one or more hardware logic circuits. Moreover, the computer program may be stored, as an instruction to be executed by a computer, in a computer-readable non-transitory tangible recording medium.

Although the present disclosure has been described on the basis of the embodiments, it should be understood that the present disclosure is not limited to the embodiments and the structures. The present disclosure also encompasses various modification examples and variations within an equivalent range. In addition, various combinations and forms and even other combinations and forms including only one element, more or less in addition thereto are also included in the scope and spirit of the present disclosure.

Hereinbelow, distinguishing configurations derived from the above-described embodiments are recited.

[Configuration 1]

An inverter control device (70) applied to a system, the system including:

an inverter (30) including: a series circuit constituted by an upper arm switch section (SUH to SWH) and a lower arm switch section (SUL to SWL) of each of a plurality of phases, and a diode section connected in antiparallel to each of the upper arm switch section (SUH to SWH) and the lower arm switch section (SUL to SWL) of each of the plurality of phases;
a rotating electrical machine (40) including an armature winding (41U to 41W) electrically connected to the inverter; and
a heat transfer section (100, 101) configured to transfer heat generated by at least the inverter to a temperature-raising object, the inverter control device comprising:

a determination section configured to determine whether a rise in temperature of the temperature-raising object is required; and
a control section configured to perform, in response to the determination section determining that the rise in temperature is required, a temperature-raising control including a first mode and a second mode executed after the first mode, wherein
the first mode is a mode in which:

in the plurality of phases, the upper arm switch section in a first specific phase is turned on while the upper arm switch section in a phase other than the first specific phase is turned off, the first specific phase being a part of the plurality of phases; and

in the plurality of phases, the lower arm switch section in a second specific phase is turned on while the lower arm switch section in a phase other than the second specific phase is turned off, the second specific phase being at least one phase other than the first specific phase in the plurality of phases, and the second mode is a mode in which:

in the plurality of phases, the upper arm switch section in the first specific phase is turned on while the upper arm switch section in the phase other than the first specific phase is turned off; and the respective lower arm switch sections in the plurality of phases are turned off.

[Configuration 2]

The inverter control device according to Configuration 1, in which

the temperature-raising control includes the first mode, the second mode, a third mode, and a fourth mode, the control section is configured to repeatedly perform, during the temperature-raising control, one cycle in which the first mode, the second mode, the third mode, and the fourth mode appear in this order, the third mode is a mode in which the respective upper arm switch sections in the plurality of phases and the respective lower arm switch sections in the plurality of phases are turned off, and the fourth mode is a mode in which:

the respective upper arm switch sections in the plurality of phases are turned off; and in the plurality of phases, the lower arm switch section in the second specific phase is turned on while the lower arm switch section in the phase other than the second specific phase is turned off.

[Configuration 3]

The inverter control device according to Configuration 1, in which

the temperature-raising control includes the first mode, the second mode, and a third mode, the control section is configured to repeatedly perform, during the temperature-raising control, one cycle in which the first mode, the second mode, and the third mode appear in this order, and the third mode is a mode in which the respective upper arm switch sections in the plurality of phases and the respective lower arm switch sections in the plurality of phases are turned off.

[Configuration 4]

The inverter control device according to Configuration 2 or 3, in which the control section is configured to repeatedly perform the one cycle with the first specific phase and the second specific phase fixed.

[Configuration 5]

The inverter control device according to Configuration 2 or 3, in which the control section is configured to select, as the first specific phase, a phase with a lowest temperature of the upper arm switch section from among the plurality of phases during the temperature-raising control.

[Configuration 6]

The inverter control device according to any one of Configurations 1 to 5, in which the control section is configured to keep the upper arm switch section and the lower arm switch section in a part of the plurality of phases off during the temperature-raising control.

**Claims**

1. An inverter control device (70) applied to a system, the system including:

an inverter (30) including: a series circuit constituted by an upper arm switch section (SUH to SWH) and a lower arm switch section (SUL to SWL) of each of a plurality of phases, and a diode section connected in antiparallel to each of the upper arm switch section (SUH to SWH) and the lower arm switch section (SUL to SWL) of each of the plurality of phases;

a rotating electrical machine (40) including an armature winding (41U to 41W) electrically connected to the inverter; and

a heat transfer section (100, 101) configured to transfer heat generated by at least the inverter to a temperature-raising object, the inverter control device comprising:

a determination section configured to determine whether a rise in temperature of the temperature-raising object is required; and

a control section configured to perform, in response to the determination section determining that the rise in temperature is required, a temperature-raising control including a first mode and a second mode executed after the first mode, wherein

the first mode is a mode in which:

in the plurality of phases, the upper arm switch section in a first specific phase is turned on while the upper arm switch section in a phase other than the first specific phase is turned off, the first specific phase being a part of the plurality of phases; and

in the plurality of phases, the lower arm switch section in a second specific phase is turned on while the lower arm switch section in a phase other than the second specific phase is turned off, the second specific phase being at least one phase other than the first specific phase in the plurality of phases, and

the second mode is a mode in which:

in the plurality of phases, the upper arm switch section in the first specific phase is turned on while the upper arm switch section in the phase other than the first specific phase is turned off; and

the respective lower arm switch sections in the plurality of phases are turned off.

2. The inverter control device according to claim 1, wherein

the temperature-raising control includes the first mode, the second mode, a third mode, and a fourth mode,

the control section is configured to repeatedly perform, during the temperature-raising control, one cycle in which the first mode, the second mode, the third mode, and the fourth mode appear in this order,

the third mode is a mode in which the respective upper arm switch sections in the plurality of phases and the respective lower arm switch sections in the plurality of phases are turned off, and

the fourth mode is a mode in which:

the respective upper arm switch sections in the plurality of phases are turned off; and

in the plurality of phases, the lower arm switch section in the second specific phase is turned on while the lower arm switch section in the phase other than the second specific phase is turned off.

3. The inverter control device according to claim 1, wherein

the temperature-raising control includes the first mode, the second mode, and a third mode,

the control section is configured to repeatedly perform, during the temperature-raising control, one cycle in which the first mode, the second mode, and the third mode appear in this order, and

the third mode is a mode in which the respective upper arm switch sections in the plurality of phases and the respective lower arm switch sections in the plurality of phases are turned off.

4. The inverter control device according to claim 2 or 3, wherein the control section is configured to repeatedly perform the one cycle with the first specific phase and the second specific phase fixed.

5. The inverter control device according to claim 2 or 3, wherein the control section is configured to select, as the first specific phase, a phase with a lowest temperature of the upper arm switch section from among the plurality of phases during the temperature-raising control.

6. The inverter control device according to any one of claims 1 to 3, wherein the control section is configured to keep the upper arm switch section and the lower arm switch section in a part of the plurality of phases off during the temperature-raising control.

7. A program applied to a system, the system including:

an inverter (30) including: a series circuit constituted by an upper arm switch section (SUH to SWH) and a lower arm switch section (SUL to SWL) of each of a plurality of phases, and a diode section connected in antiparallel to each of the upper arm switch section (SUH to SWH) and the lower arm switch section (SUL to SWL) of each of the plurality of phases;
a rotating electrical machine (40) including an armature winding (41U to 41W) electrically connected to the inverter;
a heat transfer section (100, 101) configured to transfer heat generated by at least the inverter to a temperature-raising object; and
a computer (70a),
the program causing the computer to function as:

a determination section configured to determine whether a rise in temperature of the temperature-raising object is required; and
a control section configured to perform, in response to the determination section determining that the rise in temperature is required, a temperature-raising control including a first mode and a second mode executed after the first mode, wherein
the first mode is a mode in which:

in the plurality of phases, the upper arm switch section in a first specific phase is turned on while the upper arm switch section in a phase other than the first specific phase is turned off, the first specific phase being a part of the plurality of phases; and
in the plurality of phases, the lower arm switch section in a second specific phase is turned on while the lower arm switch section in a phase other than the second specific phase is turned off, the second specific phase being at least one phase other than the first specific phase in the plurality of phases, and
the second mode is a mode in which:

in the plurality of phases, the upper arm switch section in the first specific phase is turned on while the upper arm switch section in the phase other than the first specific phase is turned off; and
the respective lower arm switch sections in the plurality of phases are turned off.

# FIG.1

# FIG.2

# FIG.3

# FIG.4

START

S10
RISE IN TEMPERATURE REQUIRED ? — NO

YES

S11
SELECT PHASE OF SWITCH WITH LOWEST TEMPERATURE FROM AMONG UPPER ARM SWITCHES IN THREE PHASES

S12
$T_{csw} > T_{th}$ ? — NO

YES

S14
DIODE ELECTRICALLY CONTINUOUS MODE

S13
SWITCH ELECTRICALLY CONTINUOUS MODE

S15
$T_{csw} > T_{lim}$ ? — YES

NO

S16
NO — $T_{obj} \geq T_{tgt}$ ?

YES

END

# FIG.5

MODE A

# FIG.6

MODE B

# FIG.7

MODE 1 (U-PHASE SELECTED)

# FIG.8

MODE 2

# FIG.9

MODE 3

# FIG.10

MODE 4

# FIG.11

```
        ┌─────────────┐
        │    START    │
        └─────────────┘
               │
               ▼           ┌─S10
    ◇ RISE IN TEMPERATURE ◇──── NO ──────────────────────┐
    ◇    REQUIRED ?       ◇                               │
               │ YES                                      │
               ▼ ◄────────────────────────────────────┐  │
        ┌─────────────────┐  ┌─S11                     │  │
        │ SELECT PHASE OF │                            │  │
        │ SWITCH WITH     │                            │  │
        │ LOWEST TEMP     │                            │  │
        │ FROM AMONG      │                            │  │
        │ UPPER ARM       │                            │  │
        │ SWITCHES IN     │                            │  │
        │ THREE PHASES    │                            │  │
        └─────────────────┘                            │  │
               │ ◄──────────────┐                      │  │
               ▼    ┌─S12        │                     │  │
    ◇ Tcsw > Tth ? ◇──── NO ─────┼──────┐              │  │
               │ YES             │      │              │  │
               ▼  ┌─S14          │      ▼  ┌─S13        │  │
   ┌──────────────┐          ┌──────────────┐          │  │
   │ DIODE        │          │ SWITCH       │          │  │
   │ ELECTRICALLY │          │ ELECTRICALLY │          │  │
   │ CONTINUOUS   │          │ CONTINUOUS   │          │  │
   │ MODE         │          │ MODE         │          │  │
   └──────────────┘          └──────────────┘          │  │
               │ ◄───────────────────┘                 │  │
               ▼  ┌─S15                                 │  │
   ◇ Tcsw > Tlim ? ◇──── YES ────────┐                 │  │
               │ NO                  ▼  ┌─S17           │  │
               ▼  ┌─S16      ◇ TEMPERATURES OF    ◇     │  │
   ◇ Tobj ≥ Ttgt ? ◇── NO ── ◇ UPPER ARM SWITCHES ◇─NO─┘  │
               │ YES         ◇ IN THREE PHASES     ◇       │
               │             ◇ > Tlim ?            ◇       │
               │                   │ YES                   │
               │ ◄─────────────────┘ ──────────────────────┘
               ▼
        ┌─────────────┐
        │     END     │
        └─────────────┘
```

EP 4 546 635 A1

# FIG.12

MODE 1 (V-PHASE SELECTED)

# FIG.13

MODE 2

# FIG.14

MODE 1 (U-PHASE SELECTED)

# FIG.15

MODE 2

# FIG.16

MODE 3

# FIG.17

MODE 4

# FIG.18

# FIG.19

# FIG.20

# FIG.21

## INTERNATIONAL SEARCH REPORT

| International application No. |
| --- |
| **PCT/JP2023/015583** |

**A. CLASSIFICATION OF SUBJECT MATTER**

*H02M 7/48*(2007.01)i
FI: H02M7/48 E

According to International Patent Classification (IPC) or to both national classification and IPC

**B. FIELDS SEARCHED**

Minimum documentation searched (classification system followed by classification symbols)

H02M7/48

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2013-187919 A (NIPPON SOKEN INC.) 19 September 2013 (2013-09-19)<br>entire text, all drawings | 1-7 |
| A | JP 2000-214940 A (CHUDENKO CORP.) 04 August 2000 (2000-08-04)<br>entire text, all drawings | 1-7 |
| A | JP 2021-065086 A (SOLAREDGE TECHNOLOGIES LTD.) 22 April 2021 (2021-04-22)<br>entire text, all drawings | 1-7 |
| A | JP 2020-137191 A (TOYOTA CENTRAL R&D LABS., INC.) 31 August 2020 (2020-08-31)<br>entire text, all drawings | 1-7 |
| A | JP 2020-120566 A (SOKEN INC.) 06 August 2020 (2020-08-06)<br>entire text, all drawings | 1-7 |
| A | JP 2021-012853 A (SOKEN INC.) 04 February 2021 (2021-02-04)<br>entire text, all drawings | 1-7 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **26 June 2023** | **11 July 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

International application No.

**PCT/JP2023/015583**

| Patent document cited in search report | | | Publication date (day/month/year) | Patent family member(s) | | | Publication date (day/month/year) |
|---|---|---|---|---|---|---|---|
| JP | 2013-187919 | A | 19 September 2013 | (Family: none) | | | |
| JP | 2000-214940 | A | 04 August 2000 | (Family: none) | | | |
| JP | 2021-065086 | A | 22 April 2021 | US entire text, all drawings | 2021/0111666 | A1 | |
| | | | | EP | 3809470 | A1 | |
| | | | | CN | 112671334 | A | |
| JP | 2020-137191 | A | 31 August 2020 | (Family: none) | | | |
| JP | 2020-120566 | A | 06 August 2020 | US entire text, all drawings | 2021/0351684 | A1 | |
| | | | | WO | 2020/153313 | A1 | |
| | | | | CN | 113348616 | A | |
| JP | 2021-012853 | A | 04 February 2021 | US entire text, all drawings | 2022/0131401 | A1 | |
| | | | | WO | 2021/006275 | A1 | |
| | | | | CN | 114097170 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022102905 A

- JP 2014072955 A